# EUROPEAN PATENT SPECIFICATION

(11) **EP 2 538 073 B1**
(45) Date of publication and mention of the grant of the patent: **13.04.2016**
(21) Application number: 12172619.4
(22) Date of filing: 19.06.2012
(51) Int. Cl.: F03D 1/00, F03D 1/06

(54) **An improvement for horizontal blade installation for wind turbines**
Verbesserung bei der horizontalen Installation von Blättern für Windturbinen
Amélioration de l'installation horizontale de pales des éoliennes

(30) Priority: 24.06.2011 DK 201170324
(43) Date of publication of application: 26.12.2012
(73) Proprietor: Vestas Wind Systems A/S, 8200 Aarhus N (DK)
(72) Inventor: Baun, Torben Friis, 8200 Århus N (DK)
(74) Representative: Vestas Patents Department

(56) References cited:
- WO-A2-2010/034288
- WO-A2-2011/064659
- DE-A1-102008 053 404
- US-A1- 2010 135 797

## Description

The invention relates to a method for installation of a blade of a horizontal axis wind turbine comprising a tower, a nacelle, and a hub.

There are different known ways of installing blades to a horizontal axis wind turbine. In some methods, the blades are mounted to the hub on the ground, and the assembled rotor, with the hub and the blades, is lifted with a crane to the nacelle at the top of the tower and mounted to it. In other methods, the blades are lifted individually one after the other with a crane to the hub after the latter has been mounted to the nacelle. In such individual blade mounting methods the hub is usually rotated between each blade installation so as to accommodate for the mounting of the next blade. For example, on three bladed wind turbines, the hub is rotated 120 degrees between each blade installation. It is also possible to install the hub to the nacelle with one or more, but not all blades mounted to it, and subsequently install the remaining blade, or the rest of the blades individually, e.g. as suggested in WO03100249.

For individual mounting of blades, two principally different methods can be used. The first one is vertical blade installation, where the blade is oriented in a vertical direction when it is brought into a mating position with the hub, see e.g. WO2010034288, JP6257555A. WO2010034288 relates to vertical blade attachment or detachment to- or from a rotor hub by means of a pulley hoist system co-operating with two surrounding braces spaced apart along the blade, each of which comprises a support element with rollers which contact the tower while the blade is being hoisted. DE102008053404 discloses a blade attachment method in which a rigid carrier beam is secured along the blade surface before advancing the beam up towards a blade hub by means of a tower lift. The second individual blade installation method is horizontal blade installation, where the blade is oriented substantially horizontally when it is brought into a mating position with the hub, see e.g. EP1925582B or EP2084098.

With the present trend towards increasing sizes of wind turbines and their blades, it is becoming more important to control the orientation of the blade while it is lifted towards the hub. For this purpose it is known to use, besides a lifting wire to the crane, control wires or tag lines, e.g. as described in WO03100249 or EP2084098. However, it would be beneficial for blade installation to further improve the control of the blade orientation.

It is an object of the invention to provide, for blade installation, an improved control of the blade, in particular of the orientation of the blade.

This object is reached with a method for installation of a blade of a horizontal axis wind turbine which has a tower, a nacelle positioned on top of the tower and a hub positioned on the nacelle, the method comprising
- providing a blade guide device mounted to the tower, to the nacelle or to the hub,
- lifting a blade towards the hub,
- while the blade is lifted, bringing an external surface of the blade and the blade guide device into contact with each other, and
- after the external surface of the blade and the blade guide device have been brought into contact with each other, bringing the blade into a mounting position in which it is fastened to the hub.

Thus, the blade guide device can be mounted to an installed part of the wind turbine, which could be e.g. the nacelle or the tower, preferably the nacelle. Here, the external surface of the blade means an outer surface which, in the mounted condition of the blade, can be seen by an external observer, and which is in contact with the air surrounding the blade, as opposed to any surface that is, in the mounted condition of the blade, in contact with, or facing, other wind turbine parts, or internal surfaces of the blade. This means that the blade will not need any special devices to mate or receive the blade guide device. Also, the blade guide device can be in contact with the blade and guide it during a substantial portion of the final blade assembly procedure, until the blade has reached its final position in relation to the hub and can be fastened thereto.

Preferably, the blade is in a substantially horizontal orientation while the external surface of the blade and the blade guide device are brought into contact with each other. Preferably, the blade is lifted by means of a crane, which is separate from the wind turbine, but the blade could also be lifted with a crane or a winch mounted on or in the wind turbine.

Preferably, the blade guide device comprises a roller, which could be in the form of a wheel, fixed to a support, in turn fixed to the erected part of the wind turbine, wherein the external surface of the blade is brought into contact with the roller. Preferably, the blade guide device comprises two rollers, arranged so that, when the external surface of the blade is brought into contact with the rollers, the rollers are separated laterally, preferably vertically, in relation to the longitudinal axis of the blade. As explained more below, this provides guiding of the blade root in two directions: vertical and horizontal. Preferably, the roller is oriented so as to roll in the longitudinal direction of the blade.

Preferably, the blade guide device can be adjusted from a retracted position to an operational, in particular extended, position. Thereby, the blade guide device can be brought into contact with the external surface of the blade by adjusting blade guide device from the retracted position to the operational position, whereby the blade could either be stationary or moved towards the blade guide device. In alternative embodiments, the blade guide device is stationary while the external surface of the blade is brought into contact with the blade guide device. Thus, the blade guide device and the blade could be brought into contact with each other for example by manipulating the crane, by manipulating control lines fastened to the blade, by adjusting the blade guide device from a retracted position to an extended position, or by a combination of two or more of these measures. A non-retractable blade guide device could, when it is not in use, be removed.

Preferably, the blade is brought into the mounting position after the external surface of the blade and the blade guide device have been brought into contact with each other. Thereby, the blade can be brought into the mounting position while in contact with the blade guide device, so that the blade root is guided to its correct position with a large degree of precision.

Preferably, the external surface of the blade and the blade guide device are brought into contact with each other at a distance from a blade root, towards a blade tip. The blade root is herein defined by an end, or a surface facing the hub in the mounted state of the blade.

Further advantageous embodiments are defined in the dependent claims 12-15.

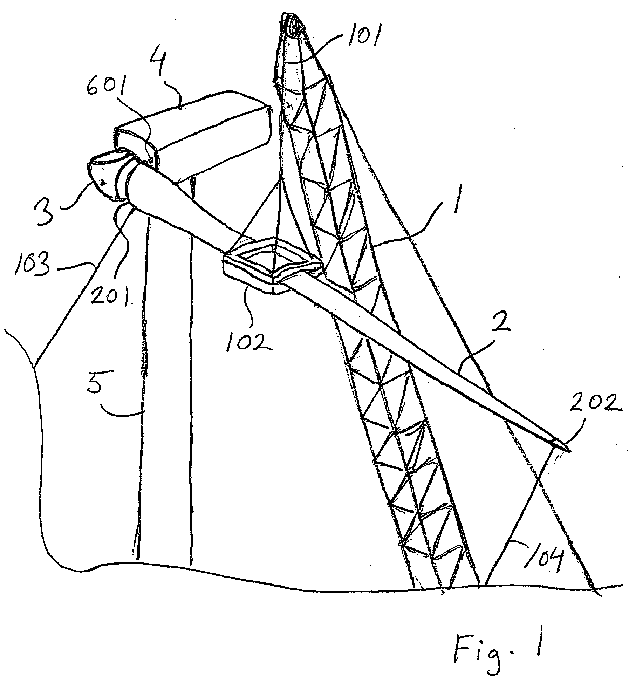

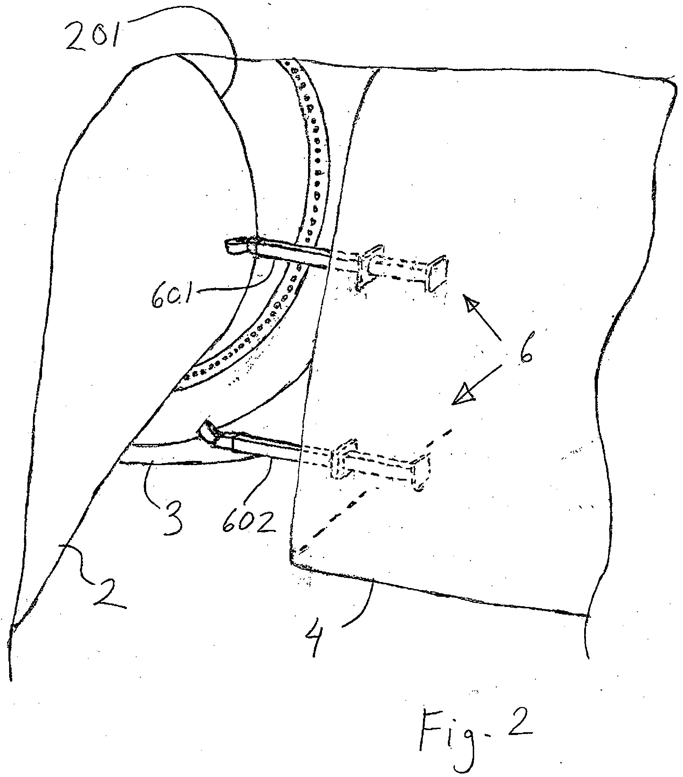

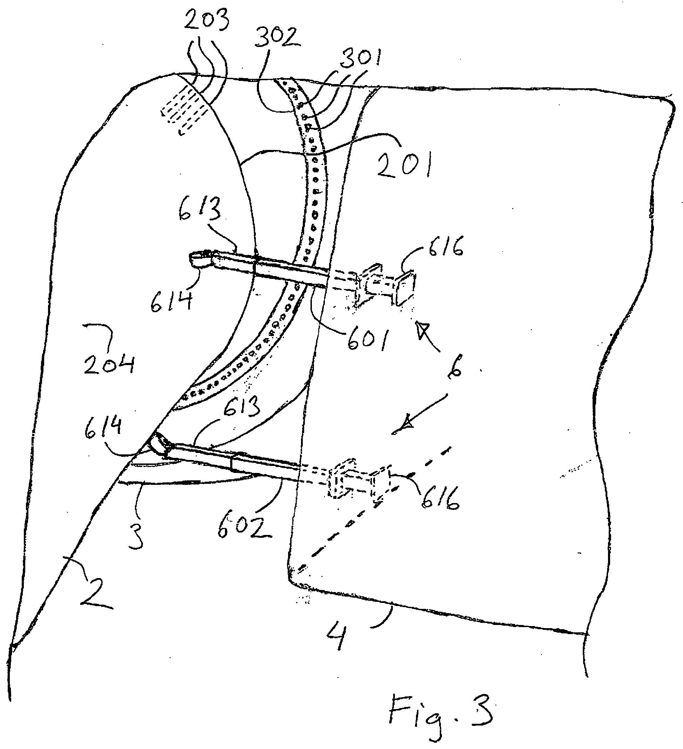

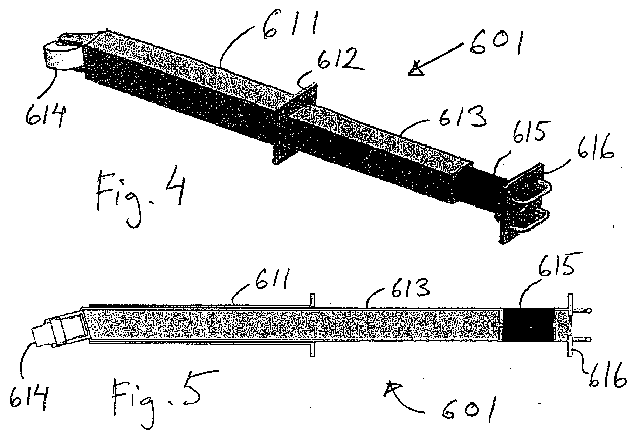

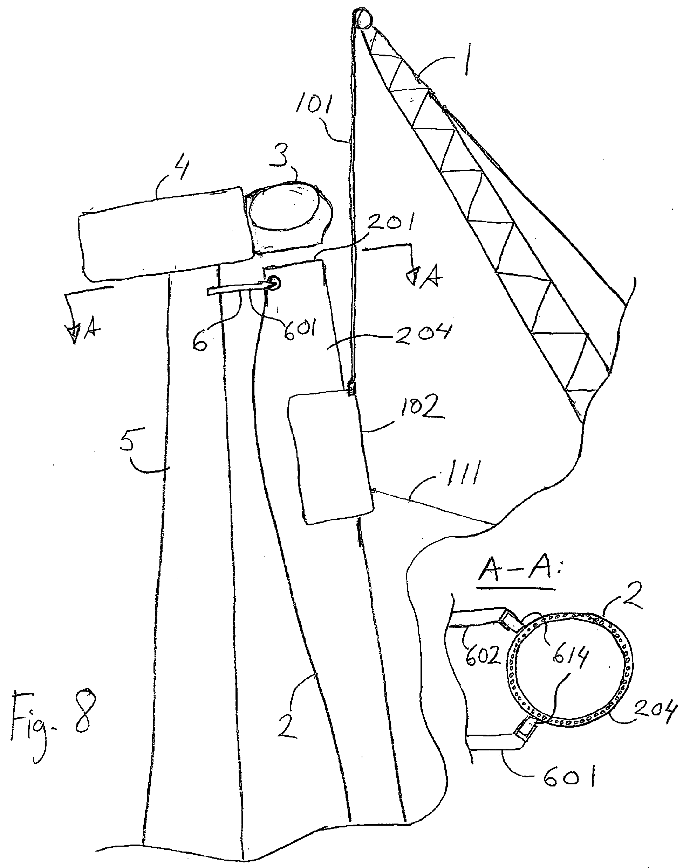

Below embodiments of the invention are described with reference to the drawings, in which fig. 1 shows a perspective view of a horizontal blade installation of a wind turbine, fig. 2 and fig. 3 show perspective views of parts of the wind turbine during the installation in fig. 1, fig. 4 shows a perspective view of a part for a blade guide device, fig. 5 shows a longitudinal cross-section of the part in fig. 4, fig. 6 and 7 show perspective views of installed wind turbine parts and blade guide devices in alternative embodiments of the invention, and fig. 8 shows a side view of a vertical blade installation of a wind turbine.

Fig. 1 shows a horizontal blade installation, where a crane 1 lifts a blade 2 from the ground towards a hub positioned on a nacelle 4, in turn positioned on top of an installed tower 5. In case of an offshore installation, of course the blade would be lifted from a ship or a barge. The crane 1 engages the blade via a lifting wire 101 and a yoke 102 at a region around the centre of gravity of the blade. In this example, the blade 2 is in a substantially horizontal orientation during the entire lifting process from the ground to the hub 3. When approaching the hub 3, the blade 2 is oriented with its blade root 201 pointing towards the hub 3. A root control line 103 is fastened to the blade root 201 and is held and controlled by a person (not shown) on the ground. A tip control line 104 is fastened to the blade tip 202 and is held and controlled by another person (not shown) on the ground.

As can be seen in fig. 2, a blade guide device 6 is mounted to the nacelle 4. The blade guide device comprises a first and a second guide part 601, 602.

Fig. 4 and fig. 5 shows the first guide part 601 in greater detail. Both guide parts 601, 602 comprises a fixed portion including a fixed square tube 611 with a flange 612 with which the guide part is mounted to the structure of the nacelle 4. More particularly, the guide parts are mounted to a nacelle wall facing towards the blade 2 to be mounted, or to a nacelle structure adjacent the wall, and the fixed square tube 611 extends trough the wall and out into the exterior. Both guide parts also comprises a movable portion including a movable square tube 613 extending coaxially and through the fixed square tube 611. At an end located externally of the nacelle 4, the movable square tube 613 is provided with a roller 614.

At an end located internally in the nacelle 4, the movable square tube 613 is provided with a damper 615 in a flexible material such as rubber. The damper 615 connects the movable square tube 613 to a connecting bracket 616, which in turn connects the movable portion to an actuator (not shown) for moving the movable portion along the direction of the square tubes 611, 613 between a retracted position, shown in fig. 2, 4 and 5, and an extended position shown in fig. 3.

As can be seen on fig. 3, when the blade 2 is positioned with its blade root 201 close to and pointing towards the hub 3, the blade guide device 6 is moved to its extended position, i.e. the movable portions 613, 614, 615, 616 are moved to their extended positions. Thus, an external surface 204 of the blade 2, at a relatively short distance from the blade root 201, in the direction of the tip 202, is brought into contact with the rollers 614 of the blade guide device 6.

Herein the blade root 201 is defined as a surface at an end of the blade 2, herein referred to as a root end, which rot end is mounted to the hub 3 in the installed condition of the blade, the surface thereby facing the hub. As is known in the art, at the root end of the blade 2, the blade has a circular cross-section and is provided with a row of threaded holes 203, (three of them indicated with broken lines in fig. 3), along the periphery of the blade root 201. When the blade is mounted, the threaded holes 203 are aligned with respective holes 301 in a movable ring 302 of a blade bearing of the hub 3, and the blade is secured to the ring 302 with bolts inserted from inside the hub, so as to provide for rotation of the blade during turbine operation to control the blade pitch. During the blade installation, while the blade is in contact with the blade guide device 6, the blade is brought into a mounting position in which the bolts (not shown) are inserted through the holes 302, 203 and the blade is fastened to the hub by tightening the bolts.

As can be understood from fig. 3, to ease the final movement of the blade 2 towards the hub 3, the rollers 614 are oriented so as to roll in the longitudinal direction of the blade 2, i.e. the rotational axes of the rollers 614 are perpendicular to the longitudinal direction of the blade and parallel with the local orientation of the external blade surface 204. Further, the two rollers 614 of the blade guide device 6 are arranged so that they are separated laterally, more specifically vertically, in relation to the longitudinal axis of the blade. This provides guiding of the blade root 201 in two directions: vertical and horizontal. More specifically, by biasing, e.g. by means of the control lines 103, 104 shown in fig. 1, the blade 2 towards the rollers 614, the direction of the blade in a horizontal plane is controlled with a large degree of precision. In addition, since rollers 614 are distributed so that one of them is in contact with the external blade surface 204 where the latter has a component facing upwards, and the other of them is in contact with the external blade surface 204 where the latter has a component facing downwards, the rollers 614 will in a "pinch-like" manner restrict the movement of the blade root 201 in a vertical direction.

The dampers 615 (fig. 4 and 5) will provide some flexibility when the blade is in contact with the rollers 614, in that they allow minor elastic movements of the rollers in a horizontal direction.

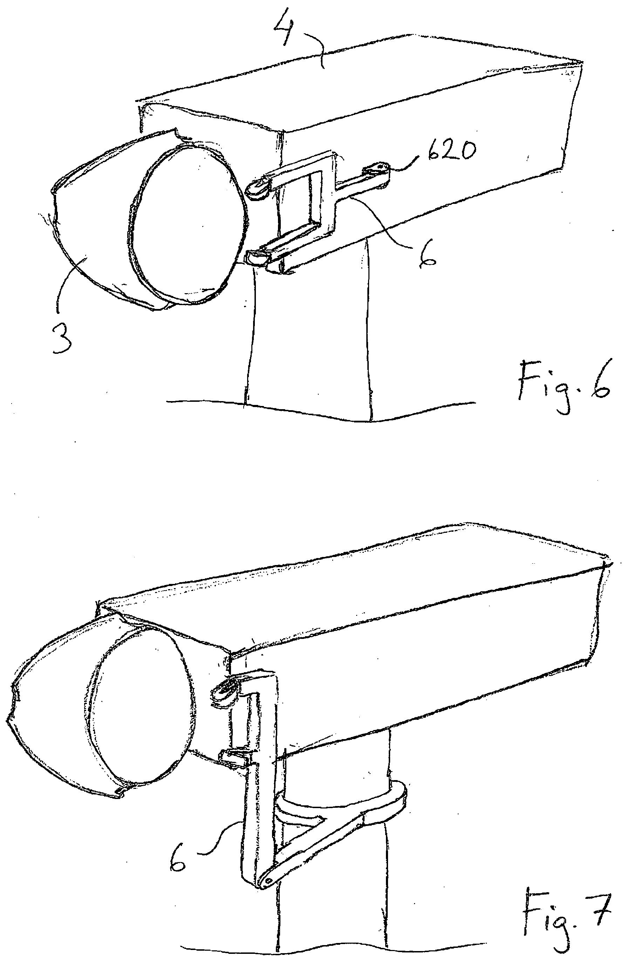

Fig. 6 shows an alternative embodiment where the blade guide device 6 is mounted externally of a wall of the nacelle 4 facing sideways in relation to rotational axis of the hub 3. The blade guide device 6 can be moved between a retracted and an operational position by swinging it horizontally around a hinge 620. Fig. 7 shows a further alternative embodiment where the blade guide device 6 is mounted on the tower.

Fig. 8 shows a vertical blade installation, where a crane 1 lifts a blade 2 towards a hub 3 positioned on a nacelle 4. The crane 1 engages the blade via a lifting wire 101 and a yoke 102, which has a gripping feature not described here in further detail. In this example, the blade 2 is, during the lifting process from the ground to the hub 3, initially in a horizontal orientation, and then swung to a substantially vertical orientation before reaching the hub 3. When approaching the hub 3, the blade 2 is oriented with its blade root 201 pointing towards the hub 3. A control line 111 is fastened to the yoke 102.

A blade guide device 6 is mounted to the tower 5. As can be seen in the view A-A, the blade guide device comprises a first and a second guide part 601, 602. At a respective free end, each guide part 601, 602 is provided with a respective roller 614.

During the lifting process, an external surface 204 of the blade 2, at a relatively short distance from the blade root 201, in the direction of the tip 202, is brought into contact with the rollers 614 of the blade guide device 6. While the blade is in contact with the blade guide device 6, the blade is brought into a mounting position in which the blade is fastened to the hub.

## Claims

1. A method for installation of a blade of a horizontal axis wind turbine which has a tower, a nacelle positioned on top of the tower and a hub positioned on the nacelle, **characterised by** the method comprising
- providing a blade guide device mounted to the tower, to the nacelle or to the hub,
- lifting a blade towards the hub,
- while the blade is lifted, bringing an external surface of the blade and the blade guide device into contact with each other, and
- after the external surface of the blade and the blade guide device have been brought into contact with each other, bringing the blade into a mounting position in which it is fastened to the hub.

2. A method according to claim 1, wherein the blade is in a substantially horizontal orientation while the external surface of the blade and the blade guide device are brought into contact with each other.

3. A method according to any one of the preceding claims, wherein the step of providing the blade guide device comprises providing the blade guide device mounted to the nacelle.

4. A method according to any one of the preceding claims, wherein the blade guide device comprises a roller, wherein the step of bringing the external surface of the blade and the blade guide device into contact with each other comprises bringing the external surface of the blade into contact with the roller.

5. A method according to any one of the preceding claims, wherein the blade guide device comprises two rollers, arranged so that, when the external surface of the blade is brought into contact with the rollers, the rollers are separated laterally in relation to a longitudinal axis of the blade.

6. A method according to any one of the claims 4-5, wherein the roller is oriented so as to roll in the longitudinal direction of the blade.

7. A method according to any one of the preceding claims, comprising adjusting the blade guide device from a retracted position to an operational position.

8. A method according to claim 7, wherein the blade guide device is brought into contact with the external surface of the blade by adjusting blade guide device from the retracted position to the operational position.

9. A method according to any one of claims 1-7, wherein the blade guide device is stationary while the external surface of the blade is brought into contact with the blade guide device.

10. A method according to any one of the preceding claims, wherein the blade is brought into the mounting position after the external surface of the blade and the blade guide device have been brought into contact with each other.

11. A method according to any one of the preceding claims, wherein the external surface of the blade and the blade guide device are brought into contact with each other at a distance from a blade root, towards a blade tip.

12. A method according to any one of the preceding claims, wherein the external surface of the blade and the blade guide device are brought into contact with each other between a blade root and the centre of gravity of the blade.

13. A method according to claim 12, wherein the contact between the external surface of the blade and the blade guide device is made closer to the blade root than to the centre of gravity of the blade.

14. A method according to any one of the preceding claims, wherein the external surface of the blade and the blade guide device are brought into contact with each other between a blade root and a region for engagement of a lifting wire of the crane.

15. A method according to claim 14, wherein the contact between the external surface of the blade and the blade guide device is made closer to the blade root than to the region for engagement of the lifting wire.

## Patentansprüche

1. Verfahren zur Installation eines Blatts einer Windturbine mit einer horizontalen Achse, die einen Turm, eine Gondel, die oben an der Spitze des Turms positioniert ist, und eine Nabe, die auf der Gondel positioniert ist, aufweist, wobei das Verfahren **gekennzeichnet ist durch** das Verfahren, das Folgendes umfasst:
- Bereitstellen einer Blattführungsvorrichtung, die an dem Turm, an der Gondel oder an der Nabe befestigt ist,
- Hochheben eines Blatts zur Nabe,
- während das Blatt hochgehoben wird, Bringen einer äußeren Oberfläche des Blatts und der Blattführungsvorrichtung in einen Kontakt miteinander, und
- nachdem die äußere Oberfläche des Blatts und die Blattführungsvorrichtung miteinander in einen Kontakt gebracht worden sind, Bringen des Blatts in eine Befestigungsposition, in der es an der Nabe befestigt wird.

2. Verfahren nach Anspruch 1, wobei sich das Blatt in einer im Wesentlichen horizontalen Orientierung befindet, während die äußere Oberfläche des Blatts und der Blattführungsvorrichtung in einen Kontakt miteinander gebracht werden.

3. Verfahren nach einem der vorhergehenden Ansprüche, wobei der Schritt des Bereitstellens der Blattführungsvorrichtung ein Bereitstellen der Blattführungsvorrichtung umfasst, die an der Gondel befestigt ist.

4. Verfahren nach einem der vorhergehenden Ansprüche, wobei die Blattführungsvorrichtung eine Rolle umfasst, wobei der Schritt des Bringens der äußeren Oberfläche des Blatts und der Blattführungsvorrichtung in einen Kontakt miteinander ein Bringen der äußeren Oberfläche des Blatts in einen Kontakt mit der Rolle umfasst.

5. Verfahren nach einem der vorhergehenden Ansprüche, wobei die Blattführungsvorrichtung zwei Rollen umfasst, die derart angeordnet sind, dass dann, wenn die äußere Oberfläche des Blatts in einen Kontakt mit den Rollen gebracht wird, die Rollen in Bezug auf eine Längsachse des Blatts seitlich getrennt werden.

6. Verfahren nach einem der Ansprüche 4 bis 5, wobei die Rolle so orientiert ist, um in die Längsrichtung des Blatts zu rollen.

7. Verfahren nach einem der vorhergehenden Ansprüche, das ein Einstellen der Blattführungsvorrichtung von einer eingezogenen Position in eine betriebsfähige Position umfasst.

8. Verfahren nach Anspruch 7, wobei die Blattführungsvorrichtung in einen Kontakt mit der äußeren Oberfläche des Blatts gebracht wird, indem die Blattführungsvorrichtung von der eingezogenen Position in die betriebsfähige Position eingestellt wird.

9. Verfahren nach einem der Ansprüche 1 bis 7, wobei die Blattführungsvorrichtung stationär ist, während die äußere Oberfläche des Blatts in einen Kontakt mit der Blattführungsvorrichtung gebracht wird.

10. Verfahren nach einem der vorhergehenden Ansprüche, wobei das Blatt in die Befestigungsposition gebracht wird, nachdem die äußere Oberfläche des Blatts und die Blattführungsvorrichtung miteinander in einen Kontakt gebracht worden sind.

11. Verfahren nach einem der vorhergehenden Ansprüche, wobei die äußere Oberfläche des Blatts und die Blattführungsvorrichtung in einem Abstand von der Blattwurzel in Richtung einer Blattspitze miteinander in einen Kontakt gebracht werden.

12. Verfahren nach einem der vorhergehenden Ansprüche, wobei die äußere Oberfläche des Blatts und die Blattführungsvorrichtung zwischen einer Blattwurzel und dem Schwerpunkt des Blatts miteinander in einen Kontakt gebracht werden.

13. Verfahren nach Anspruch 12, wobei der Kontakt zwischen der äußeren Oberfläche des Blatts und der Blattführungsvorrichtung enger an der Blattwurzel als an dem Schwerpunkt des Blatts hergestellt wird.

14. Verfahren nach einem der vorhergehenden Ansprüche, wobei die äußere Oberfläche des Blatts und die Blattführungsvorrichtung zwischen einer Blattwurzel und einem Bereich für ein Einklinken eines Hebehakens des Krans miteinander in einen Kontakt gebracht werden.

15. Verfahren nach Anspruch 14, wobei der Kontakt zwischen der äußeren Oberfläche des Blatts und der Blattführungsvorrichtung enger an der Blattwurzel als an dem Bereich für ein Einklinken eines Hebehakens hergestellt wird.

## Revendications

1. Procédé d'installation d'une pale d'une éolienne à axe horizontal, qui a une tour, une nacelle positionnée au sommet de la tour et un moyeu positionné sur la nacelle, **caractérisé par** le procédé comprenant les étapes consistant à :
- fournir un dispositif guide-pale monté sur la tour, sur la nacelle ou sur le moyeu,
- soulever une pale vers le moyeu,
- tandis que la pale est soulevée, amener une surface externe de la pale et le dispositif guide-pale en contact l'un(e) avec l'autre et
- une fois que la surface externe de la pale et le dispositif guide-pale ont été amenés en contact l'un(e) avec l'autre, amener la pale en position de montage dans laquelle elle est fixée au moyeu.

2. Procédé selon la revendication 1, dans lequel la pale se trouve dans une orientation sensiblement horizontale tandis que la surface externe de la pale et le dispositif guide-pale sont amenés en contact l'un(e) avec l'autre.

3. Procédé selon l'une quelconque des revendications précédentes, dans lequel l'étape de fourniture du dispositif guide-pale comprend la fourniture du dispositif guide-pale monté sur la nacelle.

4. Procédé selon l'une quelconque des revendications précédentes, dans lequel le dispositif guide-pale comprend un rouleau, dans lequel l'étape visant à amener la surface externe de la pale et le dispositif guide-pale en contact l'un(e) avec l'autre comprend la mise en contact de la surface externe de la pale avec le rouleau.

5. Procédé selon l'une quelconque des revendications précédentes, dans lequel le dispositif guide-pale comprend deux rouleaux aménagés de sorte que, lorsque la surface externe de la pale est amenée en contact avec les rouleaux, ceux-ci soient séparés latéralement par rapport à l'axe longitudinal de la pale.

6. Procédé selon l'une quelconque des revendications 4 à 5, dans lequel le rouleau est orienté de manière à rouler dans la direction longitudinale de la pale.

7. Procédé selon l'une quelconque des revendications précédentes, comprenant l'ajustement du dispositif guide-pale d'une position de retrait à une position opérationnelle.

8. Procédé selon la revendication 7, dans lequel le dispositif guide-pale est amené en contact avec la surface externe de la pale en ajustant le dispositif guide-pale de la position de retrait à la position opérationnelle.

9. Procédé selon l'une quelconque des revendications 1 à 7, dans lequel le dispositif guide-pale est stationnaire tandis que la surface externe de la pale est amenée en contact avec le dispositif guide-pale.

10. Procédé selon l'une quelconque des revendications précédentes, dans lequel la pale est amenée en position de montage une fois que la surface externe de la pale et le dispositif guide-pale ont été amenés en contact l'un(e) avec l'autre.

11. Procédé selon l'une quelconque des revendications précédentes, dans lequel la surface externe de la pale et le dispositif guide-pale sont amenés en contact l'un(e) avec l'autre à une certaine distance d'une emplanture de pale vers la pointe de la pale.

12. Procédé selon l'une quelconque des revendications précédentes, dans lequel la surface externe de la pale et le dispositif guide-pale sont amenés en contact l'un(e) avec l'autre entre une emplanture de pale et le centre de gravité de la pale.

13. Procédé selon la revendication 12, dans lequel le contact entre la surface externe de la pale et le dispositif guide-pale est plus proche de l'emplanture de pale que du centre de gravité de la pale.

14. Procédé selon l'une quelconque des revendications précédentes, dans lequel la surface externe de la pale et le dispositif guide-pale sont amenés en contact l'un(e) avec l'autre entre une emplanture de pale et une région d'engagement d'un câble de levage de la grue.

15. Procédé selon la revendication 14, dans lequel le contact entre la surface externe de la pale et le dispositif guide-pale est plus proche de l'emplanture de pale que de la région d'engagement du câble de levage.
